# EUROPEAN PATENT SPECIFICATION

(11) **EP 3 640 924 B1**
(45) Date of publication and mention of the grant of the patent: **20.07.2022**
(21) Application number: 18817682.0
(22) Date of filing: 14.06.2018
(51) Int. Cl.: G09F 3/02, G09F 3/04, B32B 27/00, C08J 5/18, C08J 7/04, G09F 3/00

(54) **LABEL AND METHOD FOR MANUFACTURING LABEL**
ETIKETT UND VERFAHREN ZUR HERSTELLUNG EINES ETIKETTS
ÉTIQUETTE ET PROCÉDÉ DE FABRICATION D'ÉTIQUETTE

(30) Priority: 16.06.2017 JP 2017118877
(43) Date of publication of application: 22.04.2020
(73) Proprietor: Fuji Seal International, Inc., Osaka-shi, Osaka 532-0003 (JP)
(72) Inventor: HARADA, Masafumi, Osaka-shi Osaka 532-0003 (JP); NAKAGAWA, Takahiro, Osaka-shi Osaka 532-0003 (JP)
(74) Representative: Winter, Brandl - Partnerschaft mbB
(86) International application number: PCT/JP2018/022751
(87) International publication number: WO 2018/230653

(56) References cited:
- EP-A1- 3 037 262
- WO-A1-2016/191663
- JP-A- H1 173 111
- JP-A- 2002 311 832
- JP-A- 2004 306 424
- JP-A- 2014 005 329
- JP-A- 2016 142 840
- US-A1- 2007 222 207
- US-A1- 2017 259 557

## Description

### Technical Field

The present invention relates to a label and, in particular, a label having a water-based ink layer.

### Background Art

Labels such as shrinkable labels are attached to containers such as PET bottles to provide a product name, a graphical pattern, a manufacturer name, a logotype, a product description, and the like. A print layer is formed on the labels to provide a product name, a graphical pattern, and the like. For example, Patent Literature 1 discloses a heat shrinkable label, wherein at least one surface of a heat shrinkable film is printed with a water-based ink, and a topcoat layer composed of a water-resistant or alkali-resistant resin is formed on the surface of a water-based ink layer.

### Citation List

### Patent Literature

Patent Literature 1: Japanese Patent Laid-Open No. 2001-296805

### Summary of Invention

### Technical Problem

When a water-based ink layer is formed by directly applying a water-based ink on a base material film made of a synthetic resin that constitutes a label, it is assumed that the ink is repelled and an ink layer cannot be formed over the entirety of the target zone, thus resulting in the problem of a poor label appearance.

This problem is more noticeable when the water-based ink has a greater water content. It is possible to improve the wettability of the label base material by treating the surface of the label base material by corona discharge or the like; however, in this case, blocking of the label base material may occur, which makes it difficult to handle the label base material. Also, it can be considered to perform a corona discharge treatment on the label base material immediately before applying the water-based ink, but the corona discharge treatment may not always be employed from the safety viewpoint of the manufacturing process.

An object of the present invention is to improve the appearance of a label obtained by directly forming a water-based ink layer on a label base material, without performing a special surface treatment on the label base material. This object is solved by the subject matter of the independent claims 1 and 13. Further aspects are disclosed in the subclaims.

### Solution to Problem

A label, which is one aspect of the present invention, comprises a label base material having a dyne level of 40 mN/m or less measured in accordance with JIS K 6768; a water-based ink layer directly formed on the label base material and having a halftone dot reproducibility of 50 to 95%; a first oil-based ink layer formed above the label base material so as to cover the water-based ink layer; and a second oil-based ink layer formed above the label base material so as to cover the water-based ink layer and the first oil-based ink layer.

A method for manufacturing a label, which is one aspect of the present invention, comprises the steps of providing a label base material having a dyne level of 40 mN/m or less measured in accordance with JIS K 6768; directly forming a water-based ink layer having a halftone dot reproducibility of 50 to 95% on the label base material by using a water-based ink having a water content in a solvent of 90% to 100%; forming a first oil-based ink layer above the label base material so as to cover the water-based ink layer; and forming a second oil-based ink layer above the label base material so as to cover the water-based ink layer and the first oil-based ink layer.

### Advantageous Effects of Invention

According to one aspect of the present invention, it is possible to improve the appearance of a label obtained by directly forming a water-based ink layer on a label base material, without performing a special surface treatment on the label base material. In the label according to the present invention, since the dyne level of the label base material is low, the ink is repelled and the water-based ink layer is not formed on the entirety of the target zone on the label base material; however, provision of the first oil-based ink layer and the second oil-based ink layer makes it possible to prevent the color loss of a zone where the water-based ink layer is formed and clearly show characters, graphical patterns, background colors, and the like on the label.

That is, when the water-based ink is repelled on the label base material, the halftone dot reproducibility of the water-based ink layer is lowered and, accordingly, the irregularities (the thickness variation) of the water-based ink layer increases. It is thus difficult to uniformly apply an ink to the back side of the water-based ink layer. Accordingly, in the label according to the present invention, the first oil-based ink layer is provided on the back side of the water-based ink layer to mitigate the influence of the irregularities, and the back side of the water-based ink layer is completely covered by the second oil-based ink layer. It is thus possible to clearly show characters, graphical patterns, background colors, and the like on the label.

### Brief Description of Drawings

[Figure 1] Figure 1 is a diagram (a plan view) of a label according to one embodiment as viewed from the front surface side.
[Figure 2] Figure 2 is a cross-sectional diagram taken along the line AA of Figure 1.
[Figure 3] Figure 3 is a diagram showing a cylindrical label according to one embodiment.
[Figure 4] Figure 4 is an enlarged diagram showing a portion of a label base material where a water-based ink layer is formed.
[Figure 5] Figure 5 is a micrograph showing a portion of a label base material where a water-based ink layer is formed.
[Figure 6] Figure 6 is an enlarged cross-sectional diagram showing a portion of a label base material where a water-based ink layer is formed.
[Figure 7] Figure 7 is a diagram showing a label of a comparative example.
[Figure 8] Figure 8 is a diagram showing a label of a comparative example.
[Figure 9] Figure 9 is a diagram showing a label of a comparative example.

### Description of Embodiment

Below, one embodiment according to the present invention is described in detail in reference to the drawings, but the application of the present invention is not limited to the embodiment described below. The drawings referred to in the embodiment are schematic, and thus the dimensional ratios and the like of the components depicted in the drawings should be determined in view of the following description.

Herein, when the label is attached to the attachment target such as a container, the surface of the label facing the attachment target side is referred to as the "back surface," and the surface on the opposite side to the back surface is referred to as the "front surface." Regarding the components of the label as well, the positional relationship is described using the terms "front" and "back." As for a cylindrical label obtained by forming the label into a cylindrical shape, the back surface of the label is the inner surface facing the inside of the cylinder. Herein, the "edge" when described in reference to a printing zone means a portion located at the end of the printing zone, and the "end part" means the edge of the printing zone and the vicinity thereof.

While labels 10 and 10A that are shrinkable labels having heat shrinkability are exemplified below, the configuration of the label according to the present invention is also applicable to, for example, a wrap around label, a stretchable label, and a tack label that do not have heat shrinkability.

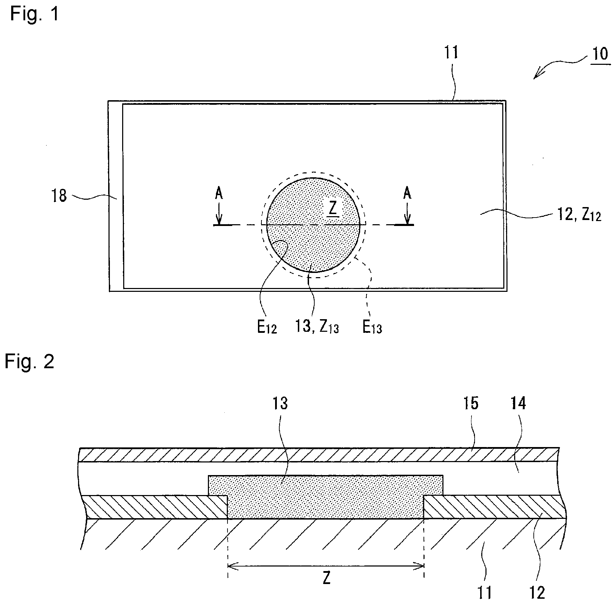

Figure 1 is a plan view of the label 10 that is one example of the embodiment, and Figure 2 is a cross-sectional view taken along the line AA of Figure 1. As illustrated in Figures 1 and 2, the label 10 comprises a label base material 11 having a dyne level of 40 mN/m or less and a water-based ink layer 13 directly formed on the label base material 11 and having a halftone dot reproducibility of 50 to 95%. Herein, the dyne level is an index representing the wettability of the label base material 11 with a liquid, and the lower the value is, the lower the wettability with water is. The halftone dot reproducibility means the proportion of zones where the water-based ink layer 13 is actually formed relative to the zones where the formation of the water-based ink layer 13 on the label base material 11 is attempted (hereinafter sometimes referred to as the "target zones").

The label 10 comprises a oil-based ink base layer 14 (a first oil-based ink layer) formed above the label base material 11 so as to cover the water-based ink layer 13, and a oil-based ink cover layer 15 (a second oil-based ink layer) formed above the label base material 11 so as to cover the water-based ink layer 13 and the oil-based ink base layer 14. Preferably, the label 10 further comprises a oil-based ink layer 12 (a third oil-based ink layer) directly formed on the label base material 11.

The oil-based ink layer 12 and the water-based ink layer 13 are print layers for showing a product name, a graphical pattern, a manufacturer name, a logotype, a product description, or the like. As will be described in detail below, the water-based ink layer 13 may be a heat sensitive print layer containing heat sensitive capsules. On the other hand, the oil-based ink base layer 14 and the oil-based ink cover layer 15 function especially as print layers for preventing damage to the water-based ink layer 13, i.e., protective layers, and also as print layers for improving the appearance of the water-based ink layer 13.

The label 10 may be formed into a rectangular shape, an elliptical shape, a circular shape, a polygonal shape other than a rectangular shape, or a shape, the edge of which has a wavy shape or the like, as viewed from above. The shape of the label 10 is determined by the shape of the label base material 11 that functions as a support for each of the above print layers. The label base material 11 is a shrinkable base material having heat shrinkability, and generally heat shrinkage in one direction differs from that in a direction perpendicular to that direction. The label base material 11 has, for example, a rectangular shape as viewed from above, and the long side direction (the circumferential direction when the label is attached to a container) is the main shrinking direction. Herein, the term "as viewed from above" means a state when the label 10 (the label base material 11) is observed perpendicularly to the front or back surface thereof.

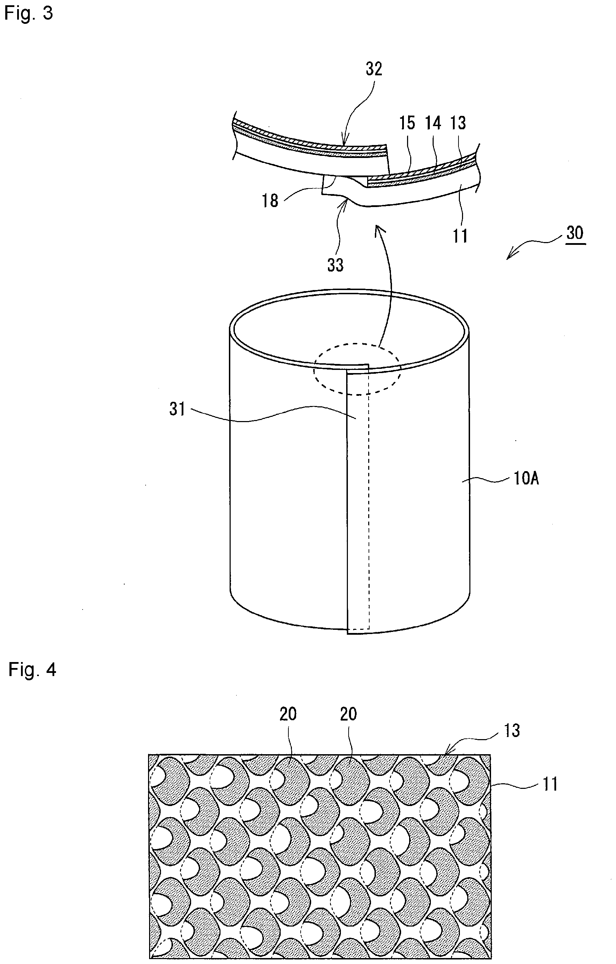

The oil-based ink layer 12 is formed on the back surface of the label base material 11 excluding the end part of the label base material 11 and a window zone Z described below. The end part along one short side of the label base material 11 has an exposed zone where the back surface of the label base material 11 is exposed, and the exposed zone is provided so as to be broader than the exposed zone of another end part. Hereinafter, this broad exposed zone is referred to as an exposed zone 18. For example, the label 10 is formed into a cylindrical shape with the long side direction being the circumferential direction of a cylinder, and a joined part is formed in the exposed zone 18 (see Figure 3 described below). Depending on the mode of joining, such as joining the circumferential end parts of a cylindrical label with an adhesive tape, the oil-based ink layer 12 may be formed to the edge of the label base material 11.

On the label base material 11, the window zone Z is provided that is surrounded by a zone where the oil-based ink layer 12 is formed (hereinafter referred to as a "zone Z₁₂"). That is, an edge E₁₂ of the zone Z₁₂ that serves as the edge of the window zone Z is formed in an annular shape. The window zone Z does not have the oil-based ink layer 12 but has the water-based ink layer 13, and the window zone Z serves as a zone where characters, graphical patterns, or the like shown by the water-based ink layer 13 are visible on the front side of the label 10 without being hidden by the oil-based ink layer 12. In the example shown in Figure 1, the water-based ink layer 13 is formed in the entirety of the window zone Z. The window zone Z has a circular shape as viewed from above and is formed in the central part in the long side direction of the label base material 11.

The shape, arrangement, and size of the window zone Z are not limited to those shown in Figure 1, and the window zone Z may have, for example, an elliptical shape, a polygonal shape, or a shape in which the edge E₁₂ is formed in a wavy form, as viewed from above. The window zone Z can be formed in any position on the label base material 11. The number of the window zones Z is not limited to 1, and a plurality of window zones Z may be provided. On the back surface of the label base material 11, the water-based ink layer 13 is formed in the window zone Z and is also formed so as to overlap the back side of the oil-based ink layer 12 disposed around the window zone Z. That is, part of the water-based ink layer 13 is formed on the oil-based ink layer 12.

The water-based ink layer 13 is provided in an annular shape having a predetermined width on the back side of the oil-based ink layer 12, and the entirety of an edge E₁₃ of a zone where the water-based ink layer 13 is formed (hereinafter referred to as a "zone Z₁₃") is disposed on the back side of the oil-based ink layer 12 (the zone Z₁₂). With the edge E₁₃ overlapping the back side of the zone Z₁₂, the edge E₁₃ can be less noticeable. The water-based ink layer 13 may be formed in a place other than the window zone Z, and, for example, the water-based ink layer 13 may be formed in a zone that is not surrounded by the zone Z₁₂, such as the vicinity of the end part of the label base material 11.

The oil-based ink base layer 14 is formed on the back surface side of the label base material 11 so as to cover the water-based ink layer 13. The oil-based ink base layer 14 covers at least part of the water-based ink layer 13, and is preferably formed so as to cover 50% or more and more preferably 70% or more of the water-based ink layer 13. In other words, there may be a portion where the oil-based ink base layer 14 is not present on the back side of the water-based ink layer 13. The oil-based ink base layer 14 is preferably formed in a range such that the oil-based ink base layer 14 overlaps the water-based ink layer 13 in the thickness direction of the label 10 and in the vicinity of the range, and part of the oil-based ink base layer 14 may be directly formed on the oil-based ink layer 12 or on the label base material 11. The oil-based ink base layer 14 may be formed in a broad range over the back surface of the label base material 11 so as to greatly exceed the range where the oil-based ink base layer 14 and the water-based ink layer 13 overlap.

The oil-based ink cover layer 15 is formed on the back surface side of the label base material 11 so as to cover the water-based ink layer 13 and the oil-based ink base layer 14. The oil-based ink cover layer 15 is preferably formed in a range such that the oil-based ink cover layer 15 overlaps the water-based ink layer 13 in the thickness direction of the label 10 and in the vicinity of the range, and part of the oil-based ink cover layer 15 may be directly formed on the oil-based ink layer 12 or the label base material 11. For example, the oil-based ink cover layer 15 is formed on the oil-based ink base layer 14 and is also formed on the water-based ink layer 13 not covered by the oil-based ink base layer 14. That is, the oil-based ink cover layer 15 is formed on the back side of the water-based ink layer 13 so as to cover the entirety of the water-based ink layer 13.

The oil-based ink cover layer 15 is preferably an opaque print layer, and prevents the color loss of the zone Z₁₃ where the water-based ink layer 13 is formed. By providing the oil-based ink cover layer 15, characters, graphical patterns, background colors, or the like on the label can be clearly shown. The color of the oil-based ink cover layer 15 may be either an achromatic color such as white or a chromatic color such as red, blue, yellow, or green. By forming an opaque oil-based ink cover layer 15, the design on the label can be clearly shown without being affected by, for example, the color of a container or the color of a liquid with which the container is filled, when the label 10 is attached to the container. The oil-based ink cover layer 15 may be formed in a broad range over the back surface of the label base material 11 so as to exceed the range where the oil-based ink cover layer 15 overlaps the oil-based ink layer 12. The oil-based ink base layer 14 may be colorless and transparent, may have an achromatic color such as white, or may have a chromatic color such as red, blue, yellow, or green.

Figure 3 is a diagram showing a cylindrical label 30 obtained by forming the label 10A into a cylindrical shape. As illustrated in Figure 3, the cylindrical label 30 is obtained by forming the label 10A into a cylindrical shape such that a surface (the back surface) of the label 10A having the water-based ink layer 13, the oil-based ink base layer 14, and the oil-based ink cover layer 15 faces inside. The cylindrical label 30 has a joined part 31 obtained by placing a first end part in the circumferential direction of the label 10A on top of a second end part in the circumferential direction such that the first end part is on the outside, and joining at least part of the inner surface of an outer end part 33 (the first end part) to the outer surface of an inner end part 32 (the second end part).

The joined part 31 is formed by, for example, bonding using a solvent such as tetrahydrofuran (THF), and may also be formed using an adhesive. An adhesive tape may be attached over the outer surfaces of the inner end part 32 and the outer end part 33 to thereby join both end parts. In the example shown in Figure 3, the print layers are not formed on the portion of the inner surface of the outer end part 33 that serves as the joined part 31, and the label base material 11 is directly joined to itself at the joined part 31. When the joined part 31 is formed by solvent bonding, a broad exposed zone such as the exposed zone 18 (see Figure 1) is preferably formed on the inner surface of the outer end part 33.

The label 10A constituting the cylindrical label 30 is different from the label 10 in that the water-based ink layer 13 is formed over a broad range on the label base material 11 as far as the inner surface of the outer end part 33 that overlaps the inner end part 32. In the case where the water-based ink layer 13 is present on the inner surface of the outer end part 33, it is assumed that, for example, when high-temperature steam is used to thermally shrink the cylindrical label 30, a softened water-based ink layer 13 is brought into contact with the inner end part 32, and thus the ink layer is cracked, resulting in a poor appearance. In order to address such a problem, a curing agent may be added to at least one of the oil-based ink base layer 14 and the oil-based ink cover layer 15 to cure the coating film. In Figure 3, illustration of the oil-based ink layer 12 is omitted. The oil-based ink layer 12 may be formed on, for example, part or the entirety of the inner surface of the label base material 11 excluding the outer end part 33.

Below, the components of the label 10 are described in further detail.

### [Label base material 11]

The label base material 11 is, for example, a shrinkable base material having heat shrinkability and is preferably composed of a colorless, transparent shrinkable film. However, the label base material 11 is not limited to a shrinkable base material, and may be an unstretched base material having substantially no heat shrinkability, a stretchable base material having a stretchable and non-shrinkable base material, or the like. For example, when the label 10 is a wrap around label, an unstretched film or a non-shrinkable film is applicable to the label base material 11, and when the label 10 is a stretchable label, a stretchable film having stretchability is applicable to the label base material 11.

The type of the resin constituting the label base material 11 can be suitably selected according to the required physical properties, application, cost, and the like, and examples include, but are not particularly limited to, resins such as polyester resins, polyolefin resins, polystyrene resins, polyvinyl chloride resins, polyamide resins, and acrylic resins. In particular, polyester resins, polyolefin resins, and polystyrene resins are preferable. These resins may be used singly, or in combinations of two or more. The resin film constituting the label base material 11 may be a single layer film or a laminated film obtained by laminating the same or different type of resins.

Polyester resins usable in the polyester film may be a polyethylene terephthalate (PET) resin, poly(ethylene-2,6-naphthalenedicarboxylate) (PEN), and polylactic acid (PLA). In particular, a PET resin is preferable. Examples of the polyolefin resins usable in the polyolefin film include polyethylene resins such as low density polyethylene (LDPE), high density polyethylene (HDPE), linear low density polyethylene (LLDPE), and metallocene catalyst LLDPE (mLLDPE), polypropylene resins such as polypropylene and propylene-α-olefin copolymers, ethylene-vinyl acetate copolymers, and cyclic olefin resins. Examples of the polystyrene resins usable in the polystyrene film include polystyrene, styrene-butadienestyrene copolymers (SBS), styrene-butadiene/isoprene-styrene copolymers (SBIS), and styrene-acrylate copolymers.

The dyne level of the label base material 11 is 40 mN/m or less and may be 38 mN/m or less. The dyne level of the label base material 11 is, for example, 30 to 40 mN/m or 35 to 38 mN/m. When the label base material 11 is composed of a polyolefin film, the dyne level is about 40 mN/m, and when the label base material 11 is composed of a polystyrene film, the dyne level is about 38 mN/m. When the dyne level of the label base material 11 is 40 mN/m or less and in particular 38 mN/m or less, the wettability with water is reduced and the water-based ink is likely repelled, thus making it difficult to form the water-based ink layer 13 in the entirety of the target zone. The dyne level of the label base material 11 is measured in accordance with JIS K 6768.

When the label base material 11 is a shrinkable film, the film is preferably a film oriented in at least one direction from the viewpoint of exerting good shrink characteristics. The label base material 11 thermally shrinks mainly in the orientation direction of the shrinkable film. A preferably used shrinkable film is a uniaxially oriented film oriented in one direction (including a film stretched substantially in one direction, which is mainly stretched in one direction and slightly stretched in a direction perpendicular to that direction) or a biaxially oriented film. The oriented film is obtained by stretching an unstretched film in at least one direction by, for example, a tenter method, a roll method, or a tube method.

The heat shrinkage in the main shrinking direction of the shrinkable film is, for example, preferably 30 to 90%, more preferably 40 to 85%, and particularly preferably 45 to 80% under conditions involving immersion in hot water at 90°C for 10 seconds. The heat shrinkage in the direction perpendicular to the main shrinking direction of the shrinkable film (immersed in hot water at 90°C for 10 seconds) is not particularly limited, and is preferably -3 to 15% and more preferably -1 to 10%. The thickness of the shrinkable film is not particularly limited, and is preferably 10 µm to 100 µm, more preferably 15 µm to 80 µm, and particularly preferably 20 µm to 60 µm.

### [Oil-based ink layer 12]

The oil-based ink layer 12 is a print layer for showing a product name, a graphical pattern, a manufacturer name, a logotype, a product description, or the like, and is formed in any print pattern. The print pattern means a design such as characters or graphical patterns, and the arrangement of the design. The oil-based ink layer 12 can be formed by a conventionally known printing method such as a gravure printing method, a flexographic printing method, a rotary letterpress printing method, or a screen printing method. The plate printing method is a printing method involving a plate prepared in accordance with the characters, graphical patterns, or the like of a print layer. For example, an intaglio printing plate is used in the gravure printing method, a relief printing plate is used in the flexographic printing method and the rotary letterpress printing method, and a permeographic printing plate is used in the screen printing method.

The oil-based ink layer 12 contains, for example, a coloring material and a binder resin, and may contain various additives. The oil-based ink layer 12 can be formed using a conventionally known oil-based ink. The oil-based ink is also called a solvent type ink, and contains, for example, a coloring material, a binder resin, an optional additive, and an organic solvent, in which the binder resin and the coloring material are dissolved or dispersed in the solvent. In the state of the oil-based ink layer 12 (the same applies to other oil-based ink layers), the organic solvent is evaporated. Generally, the oil-based ink layer 12 is soluble in an organic solvent and insoluble even when exposed to an aqueous solvent.

The color (hue, lightness, saturation) of the oil-based ink layer 12 can be suitably set according to the design such as characters and graphical patterns, and examples include red, yellowish red, yellow, yellowish green, green, bluish green, blue, bluish purple, purple, reddish purple, metallic color (such as silver color or gold color), and pearl color. The color of the oil-based ink layer 12 may be white, black, or gray (achromatic). The oil-based ink layer 12 forms characters, graphical patterns, or the like by, for example, one print layer containing one coloring material or by a combination of two or more print layers containing mutually different coloring materials.

The coloring material contained in the oil-based ink layer 12 is not particularly limited as long as the color desired according to the design such as characters and graphical patterns can be provided, and conventionally known dyes and pigments are usable. Specific examples of the coloring material include cyan pigments (such as copper phthalocyanine blue, ultramarine blue, and Prussian blue), magenta pigments (such as condensed azo pigments and red lead), yellow pigments (such as azo lake pigments, yellow lead, and zinc yellow), and black pigments (such as carbon black and titanium black). By each of the cyan (C), magenta (M), yellow (Y), and black (K) pigments, or by combining two or more of these, the above various colors can be provided. Metal pigments, pearl pigments, and extender pigments such as alumina, calcium carbonate, and barium sulfate may be used.

Examples of the binder resin contained in the oil-based ink layer 12 include one or a mixture of two or more selected from acrylic resins, polyurethane resins, polyester resins, cellulose resins, polyamide resins, polyolefin resins, polyvinyl chloride resins, polyvinyl acetate resins, and vinyl chloride-vinyl acetate copolymer resins. In particular, acrylic resins, polyurethane resins, and cellulose resins are preferable.

The oil-based ink layer 12 is formed by, for example, applying the desired printing ink in the form of a large number of dots to the label base material 11, and the color and in particular the light and dark shading or the like of the oil-based ink layer 12 are shown according to the size of the dots and the dot area per unit area of the label base material 11. The dot is generally called a halftone dot. The density, size, and the like of the halftone dots of the printing ink can be regulated by changing the irregularity pattern of the plate. The halftone dot reproducibility in the oil-based ink layer 12 is, for example, about 100%. The thickness of the oil-based ink layer 12 is not particularly limited, and is preferably 0.1 µm to 5 µm.

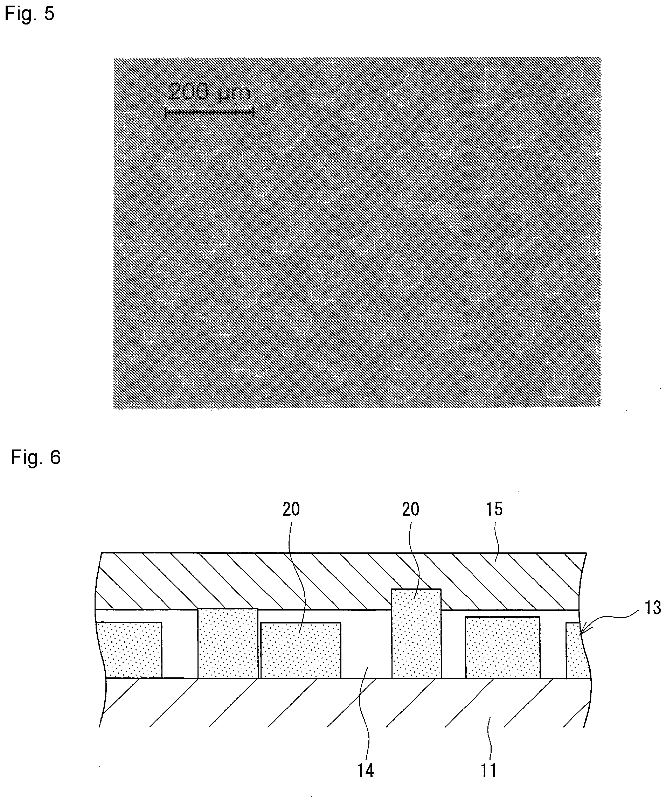

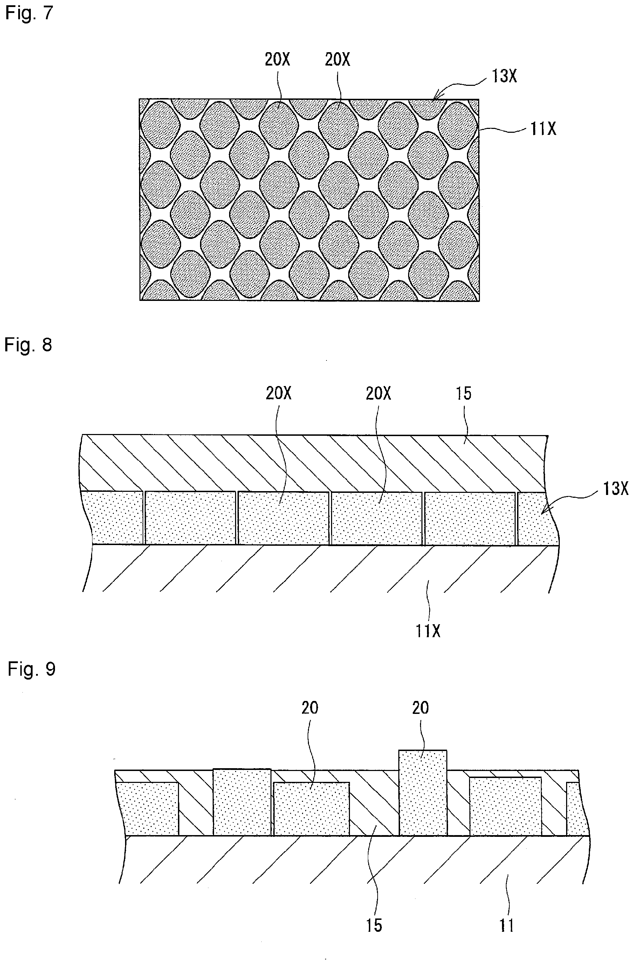

Below, the water-based ink layer 13, the oil-based ink base layer 14, and the oil-based ink cover layer 15 are described in detail with reference to Figures 4 to 6 as necessary. Figure 4 is an enlarged diagram showing a portion of the label base material 11 where the water-based ink layer 13 is formed (illustration of the oil-based ink base layer 14 and the oil-based ink cover layer 15 is omitted). Figure 5 is an electron micrograph (SEM) of a portion where the water-based ink layer 13 is formed. Figure 6 is an enlarged cross-sectional diagram showing a portion where the water-based ink layer 13 is formed. As comparative examples, Figures 7 and 8 show the cases where a label base material 11X having a high dyne level is used, and Figure 9 shows the case where the oil-based ink base layer 14 is not provided.

### [Water-based ink layer 13]

The water-based ink layer 13, as with the oil-based ink layer 12, is a print layer for showing a product name, a graphical pattern, a manufacturer name, a logotype, a product description, or the like, and is formed in any print pattern. The water-based ink layer 13 can be formed by a conventionally known printing method such as a gravure printing method (the same applies to the oil-based ink base layer 14 and the oil-based ink cover layer 15). The water-based ink layer 13 contains, for example, a coloring material and a binder resin, and may contain various additives.

The water-based ink layer 13 can be formed using a conventionally known water-based ink. The water-based ink contains, for example, a coloring material, a binder resin, an optional additive, and an aqueous solvent, in which the binder resin and the coloring material are dissolved or dispersed in the aqueous solvent. The aqueous solvent is a solvent mainly composed of water, and the proportion of water is preferably 90% to 100%, and more preferably 95% to 100%. In the state of the water-based ink layer 13, the aqueous solvent is evaporated. Generally, the water-based ink layer 13 is dissolved in or swollen by the aqueous solvent.

The color (hue, lightness, saturation) of the water-based ink layer 13, as with the oil-based ink layer 12, can be suitably set, and examples include red, yellowish red, yellow, yellowish green, green, bluish green, blue, bluish purple, purple, reddish purple, metallic color (such as silver color or gold color), and pearl color. The color of the water-based ink layer 13 may be white, black, or gray (achromatic). The water-based ink layer 13 forms characters, graphical patterns, or the like by, for example, one print layer containing one coloring material or by a combination of two or more print layers containing mutually different coloring materials.

The coloring material contained in the water-based ink layer 13 is not particularly limited as long as the color desired according to the design such as characters and graphical patterns can be provided, and conventionally known dyes and pigments are usable. Specific examples of the coloring material include the above cyan pigments, magenta pigments, yellow pigments, and black pigments. Metal pigments, pearl pigments, and extender pigments such as alumina, calcium carbonate, and barium sulfate may be used.

The water-based ink layer 13 may contain microcapsules such as heat sensitive capsules as a coloring material. The heat sensitive capsules are a coloring material, the color of which changes according to the temperature change. For example, the heat sensitive capsules are colorless at a predetermined temperature or higher and develop a color at a temperature below the predetermined temperature, or are colorless at a predetermined temperature or lower and develop a color at a temperature exceeding the predetermined temperature. The water-based ink layer 13 may be colorless when the temperature of the layer is at a predetermined temperature or higher and develop a color when the temperature of the layer is lower than the predetermined temperature, e.g., may be colorless at normal temperature (25°C) and develop a color at a temperature of 10°C or lower. That is, when a bottle to which the label 10 is attached is cooled, the design appears due to the heat sensitive print layer. Also, the water-based ink layer 13 may be colorless when the temperature of the layer is at a predetermined temperature or lower and develop a color when the temperature of the layer exceeds the predetermined temperature, e.g., may be colorless at normal temperature and develop a color at a temperature of 50°C or higher. That is, when a bottle to which the label 10 is attached is heated, the design appears due to the heat sensitive print layer. Provision of such a heat sensitive print layer makes it possible to impart to the label 10 the function to indicate when to eat, when to drink, or the like. The heat sensitive capsules contained in the water-based ink layer 13 may be irreversible heat sensitive capsules, the color change of which is irreversible, and are preferably reversible heat sensitive capsules, the color change of which is reversible. Examples of reversible heat sensitive capsules include microcapsules of a leuco dye, a color developer, and a solvent. In this case, microcapsules develop a color when the leuco dye and the color developer are in a bonded state in which electrons are donated to and accepted from each other, and microcapsules are colorless when the leuco dye and the color developer are in a non-bonded state in which electrons are neither donated nor accepted. The temperature of color development can be changed by changing the type of solvent. The heat sensitive capsules may be colorless when in the bonded state and develop a color when in the non-bonded state. Heat sensitive capsules in which a leuco dye is used easily collapse and become deactivated in an organic solvent, and therefore the configuration of the label 10 is suitable when such heat sensitive capsules are directly provided on the label base material 11. The water-based ink layer 13 may contain aroma capsules or the like as a coloring material. The water-based ink layer 13 may contain irreversible heat sensitive capsules that are colorless at normal temperature (25°C) and develop a color at a temperature of 50°C or higher. In this case, once exposed to a specific temperature range (for example, 50°C or higher), the heat sensitive print layer remains colored, thus making it possible to detect exposure to the specific temperature range.

In the case where the water-based ink layer 13 is a heat sensitive print layer containing heat sensitive capsules, the oil-based ink base layer 14 is an opaque print layer or a colorless, transparent print layer, and the oil-based ink cover layer 15 is an opaque print layer, a design is shown by at least the oil-based ink cover layer 15 when the heat sensitive print layer does not develop a color. On the other hand, when the heat sensitive print layer develops a color, the background color of the heat sensitive print layer is provided by the oil-based ink cover layer 15 or the like such that the heat sensitive print layer appears attractive. In particular, in the case where the oil-based ink base layer 14 is a white print layer or a colorless, transparent print layer, and the oil-based ink cover layer 15 is a white print layer, a white design is shown by at least the oil-based ink cover layer 15 when the heat sensitive print layer does not develop a color. On the other hand, when the heat sensitive print layer develops a color, the background color of the heat sensitive print layer is provided by the oil-based ink cover layer 15 or the like such that the heat sensitive print layer appears attractive. That is, the colored heat sensitive print layer is clearly shown. The oil-based ink base layer 14 is preferably an opaque print layer containing the same coloring material as that of the oil-based ink cover layer 15 (a print layer having the same color as the oil-based ink cover layer 15) or a colorless, transparent print layer. When the oil-based ink base layer 14 is an opaque print layer, the design and the background color are provided by both the oil-based ink base layer 14 and the oil-based ink cover layer 15.

The average particle size of the heat sensitive capsules is, for example, 0.1 µm to 5 µm. Herein, the average particle size means a volume average particle size as measured by a laser diffraction method and a median size at which the volume integrated value is 50% in the particle size distribution. The function of the heat sensitive capsules is easily deteriorated by organic solvents. Accordingly, when the heat sensitive capsules are used, the water content in the solvent of a water-based ink that forms the water-based ink layer 13 is preferably 90% to 100%, and more preferably 95% to 100%.

As with the oil-based ink layer 12, examples of the binder resin contained in the water-based ink layer 13 include acrylic resins, polyurethane resins, polyester resins, and cellulose resins, but unlike the binder resin of the oil-based ink layer 12, which is lipophilic, the binder resin of the water-based ink layer 13 is hydrophilic. The binder resin of the water-based ink layer 13 has a hydrophilic group such as a hydroxyl group or an amine-neutralized carboxy group, or is hydrophilized by a surfactant. The binder resin of the water-based ink layer 13 generally has a greater molecular weight than the binder resin of the oil-based ink layer 12. For example, the weight average molecular weight (Mw) of the binder resin of the oil-based ink layer 12 is less than 100000 (preferably less than 50000), whereas the weight average molecular weight of the binder resin of the water-based ink layer 13 is 100000 or more.

As shown in Figures 4 to 6, the water-based ink layer 13 is formed by applying a large number of halftone dots 20, which are a large number of dots, to the label base material 11. In general, a larger area of the halftone dots 20 per unit area of the label base material 11 enables a darker graphical pattern or the like to be shown. As described above, the dyne level of the label base material 11 is as low as 40 mN/m or less, and thus a water-based ink is unlikely to spread over the label base material 11. Accordingly, the halftone dot reproducibility of the water-based ink layer 13 is smaller than that of the oil-based ink layer 12. The thickness of the water-based ink layer 13 is not particularly limited, and is preferably 0.1 µm to 5 µm. Compared with the oil-based ink layer 12, the thickness of the water-based ink layer 13 is likely to vary greatly at each halftone dot 20.

The halftone dot reproducibility of the water-based ink layer 13 is 50 to 95%, 75 to 95%, or 50 to 70%. That is, as for the target zones of the halftone dots 20 indicated by dotted lines in Figure 4, the water-based ink layer 13 is formed in 50 to 95% of the zones, and the water-based ink does not adhere to, and thus the water-based ink layer 13 is not formed in, 5 to 50% of the zones. The size of the target zones of the halftone dots 20 is determined by, for example, the size of holes in a printing plate. When the size of the halftone dots 20 is the same as the size of holes in a printing plate, the halftone dot reproducibility is 100%. In the case of the oil-based ink layer 12, the oil-based ink spreads over the label base material 11, and the halftone dot reproducibility may exceed 100%.

The shape of the target zones of the halftone dots 20, i.e., the shape of holes in the printing plate, is not particularly limited, and may be a perfectly circular shape, an elliptical shape, a rectangular shape, or the like. As shown in Figures 7 and 8, the use of the label base material 11X having a high dyne level makes it possible to attain a halftone dot reproducibility of about 100%, and a water-based ink layer 13X composed of halftone dots 20X corresponding to the shape of the target zones is formed. As shown in Figures 4 and 5, on the other hand, in the label 10, even when the shape of the target zones is circular, the halftone dots 20 are formed in a C shape or a U shape, and the halftone dot reproducibility is 50 to 95%. In this case, the gap formed between the adjacent halftone dots 20 is larger, and the thickness of the halftone dots 20 is larger, than those when the halftone dot reproducibility is 100%. In particular, when the halftone dot reproducibility at each halftone dot 20 greatly varies, the thickness of the water-based ink layer 13X greatly varies at each halftone dot 20.

### [Oil-based ink base layer 14]

As shown in Figure 6, the oil-based ink base layer 14 is formed so as to cover a plurality of halftone dots 20 constituting the water-based ink layer 13 and also fill up the gap between the halftone dots 20. As shown in Figure 9, when the oil-based ink base layer 14 is not provided, the oil-based ink cover layer 15 is formed in the gap between the halftone dots 20, and some of the halftone dots 20 are not covered by the oil-based ink cover layer 15. However, with the oil-based ink base layer 14 being provided, all halftone dots 20 are covered by the oil-based ink cover layer 15. When some of the halftone dots 20 are not covered by the oil-based ink cover layer 15, such dots are visible and impair the appearance of the zone Z₁₃, but providing the oil-based ink base layer 14 makes it possible to prevent such a defect and enables characters, graphical patterns, background colors, and the like on the label to be clearly shown.

The oil-based ink base layer 14 may be colorless and transparent because the oil-based ink base layer 14 is provided to fill up the gap between the adjacent halftone dots 20, mitigate the influence of different thicknesses of the halftone dots 20, and thus cause all halftone dots 20 to be covered by the oil-based ink cover layer 15. The oil-based ink base layer 14 may be composed solely of a binder resin. Alternatively, the oil-based ink base layer 14 may contain the same coloring material as that of the oil-based ink cover layer 15, such as a white pigment. Also, the oil-based ink base layer 14 may contain the same coloring material as that of the water-based ink layer 13.

Configuring the oil-based ink base layer 14 to be a colorless, transparent print layer and the oil-based ink cover layer 15 to be an opaque print layer (for example, a white print layer) makes it possible to smooth the irregularities of the water-based ink layer to a suitable extent by the colorless oil-based ink base layer 14 and securely cover the back side of the water-based ink layer by the colored oil-based ink cover layer 15, thus enabling the background color and the like on the label to be clearly shown.

The oil-based ink base layer 14 can be formed using a conventionally known oil-based ink. Generally, the oil-based ink base layer 14 is soluble in an organic solvent and insoluble even when exposed to an aqueous solvent. As in the case of the oil-based ink layer 12, one or a mixture of two or more selected from acrylic resins, polyurethane resins, polyester resins, cellulose resins, polyamide resins, polyolefin resins, polyvinyl chloride resins, polyvinyl acetate resins, vinyl chloride-vinyl acetate copolymer resins, and the like is usable as the binder resin of the oil-based ink base layer 14. For the oil-based ink cover layer 15 as well, the same binder resins are usable, and the oil-based ink base layer 14 and the oil-based ink cover layer 15 may be composed of the same type of binder resin.

At least one of the oil-based ink base layer 14 and the oil-based ink cover layer 15 may contain a curing agent component as described above. For example, a curing agent may be added to the oil-based ink that forms the oil-based ink cover layer 15 and, in this case, the curing agent and the functional group of the binder resin react to cure the coating film. The curing agent may react with the functional groups of the resins constituting the oil-based ink base layer 14, the water-based ink layer 13, the oil-based ink layer 12, and the label base material 11, and the entirety of the print layers may be cured. When the print layers such as the oil-based ink cover layer 15 is cured, the strength of the coating film increases, thus making it possible to prevent cracking of the water-based ink layer 13 and the like during heat shrinking.

Examples of the curing agent include aziridine curing agents and carbodiimide curing agents. In particular, aziridine curing agents are preferable. Examples of aziridine curing agents include trimethylolpropane tris[3-(1-aziridinyl)propionate], trimethylolpropane tris[3-(1-(2-methyl)aziridinylpropionate)], N,N'-toluene-2,4-bis(1-aziridinecarboxide), N,N'-diphenylmethane-4,4'-bis(1-aziridinecarboxide), triethylenemelamine, bisisoprotaloyl-1-(2-methylaziridine), tri-1-aziridinyl phosphine oxide, tetramethylolmethane-tri-β-aziridinylpropionate, 2,2'-bishydroxymethylbutanol-tris[3-(1-aziridinyl)propionate], 1,6-hexamethylenediethyleneurea, N,N'-diphenylmethane-4,4'-bis(1-aziridinecarboxamide), and N,N'-hexamethylene-1,6-bis(1-aziridinecarboxamide).

The oil-based ink base layer 14 may be composed of a plurality of halftone dots as in the water-based ink layer 13 or the like, and is preferably formed such that the coating film (halftone dots) is continuous so as to form a solid coating. The thickness of the oil-based ink base layer 14 is, for example, 0.1 µm to 5 µm. The thickness of the oil-based ink base layer 14 is not particularly limited, and the oil-based ink base layer 14 is preferably formed so as to have a greater thickness than the average thickness of the water-based ink layer 13 in order to mitigate the irregularities of the water-based ink layer 13 and prevent the color loss.

### [Oil-based ink cover layer 15]

As shown in Figure 6, the oil-based ink cover layer 15 is an overcoat layer which is formed on the oil-based ink base layer 14 and part of which is directly formed on the water-based ink layer 13. The oil-based ink cover layer 15 is preferably formed so as to cover the back side of all halftone dots 20. The oil-based ink cover layer 15 is an opaque print layer and, by overlapping the back side of all halftone dots 20, makes it possible to prevent the color loss of the zones where the water-based ink layer 13 is formed, and makes it possible to clearly show characters, graphical patterns, background colors, and the like on the label. The oil-based ink cover layer 15 contains, for example, a coloring material and a binder resin, and may contain various additives.

The coloring material contained in the oil-based ink cover layer 15 may be the above cyan pigment, magenta pigment, yellow pigment, black pigment, or the like, or may be a white pigment such as titanium oxide. The oil-based ink cover layer 15 can be formed using a conventionally known oil-based ink. Generally, the oil-based ink cover layer 15 is soluble in an organic solvent and insoluble even when exposed to an aqueous solvent. The same type of binder resin as that of the oil-based ink base layer 14 is applicable. The oil-based ink cover layer 15 may contain the above curing agent component.

The oil-based ink cover layer 15 is preferably formed such that the coating film (halftone dots) is continuous so as to form a solid coating as in the oil-based ink base layer 14. The thickness of the oil-based ink cover layer 15 is, for example, 0.1 µm to 5 µm. The thickness of the oil-based ink cover layer 15 is not particularly limited, and the oil-based ink cover layer 15 is preferably formed so as to have a greater thickness than the average thickness of the water-based ink layer 13.

As described above, the label 10 with the above configuration has an improved appearance without performing a special surface treatment on the label base material 11. In the label 10, the dyne level of the label base material 11 is low, and thus the water-based ink layer 13 is not formed on the entirety of the target zones on the label base material 11. However, in the label 10, the oil-based ink base layer 14 is provided to mitigate the irregularities of the water-based ink layer 13 and then the oil-based ink cover layer 15 is formed, thus making it possible to prevent the color loss of the zone Z₁₃ where the water-based ink layer 13 is formed and making it possible to clearly show characters, graphical patterns, background colors, and the like on the label.

One example of the method for manufacturing the label 10 comprises the steps of providing the label base material 11 having a dyne level of 40 mN/m or less; directly forming the water-based ink layer 13 having a halftone dot reproducibility of 50 to 95% on the label base material 11 by using a water-based ink having a water content in a solvent of 90% to 100%; forming the oil-based ink base layer 14 above the label base material 11 so as to cover the water-based ink layer 13; and forming the oil-based ink cover layer 15 above the label base material 11 so as to cover the water-based ink layer 13 and the oil-based ink base layer 14. The "ink layer" refers to a layer composed of a solidified ink formed by performing printing with a conventionally known ink using a conventionally known printing method (such as gravure printing, flexographic printing, or rotary letterpress printing).

### Reference Signs List

- 10, 10A: Label
- 11: Label base material
- 12: Oil-based ink layer
- 13: Water-based ink layer
- 14: Oil-based ink base layer
- 15: Oil-based ink cover layer
- 20: Halftone dot
- 30: Cylindrical label
- 31: Joined part
- 32: Inner end part
- 33: Outer end part
- E₁₂, E₁₃: Edge
- Z: Window zone
- Z₁₂, Z₁₃: Zone

## Claims

1. A label comprising:
a label base material having a dyne level of 40 mN/m or less measured in accordance with JIS K 6768;
a water-based ink layer directly formed on the label base material and having a halftone dot reproducibility of 50 to 95%, as measured according to the description;
a first oil-based ink layer formed above the label base material so as to cover the water-based ink layer; and
a second oil-based ink layer formed above the label base material so as to cover the water-based ink layer and the first oil-based ink layer.

2. The label according to claim 1, further comprising a third oil-based ink layer directly formed on the label base material, wherein
part of the water-based ink layer is formed on the third oil-based ink layer.

3. The label according to claim 2, wherein
a window zone surrounded by the third oil-based ink layer is formed on the label base material, and
the water-based ink layer is formed in the window zone and is also formed so as to overlap a back side of the third oil-based ink layer disposed around the window zone.

4. The label according to claim 3, wherein the entirety of an edge of a zone where the water-based ink layer is formed is disposed on the back side of the third oil-based ink layer.

5. The label according to any one of claims 1 to 4, wherein the water-based ink layer contains microcapsules.

6. The label according to claim 5, wherein the water-based ink layer is a heat sensitive print layer containing heat sensitive capsules as the microcapsules.

7. The label according to claim 6, wherein the heat sensitive capsules have an average particle size as measured according to the description of 0.1 to 5 µm.

8. The label according to claim 6 or 7, wherein
the first oil-based ink layer is an opaque print layer or a colorless, transparent print layer, and
the second oil-based ink layer is an opaque print layer.

9. The label according to claim 8, wherein the first oil-based ink layer contains the same coloring material as that of the second oil-based ink layer.

10. The label according to claim 8 or 9, wherein
the water-based ink layer is colorless when a temperature of the layer is at a predetermined temperature or lower and develops a color when the temperature of the layer exceeds the predetermined temperature, or is colorless when the temperature of the layer is at the predetermined temperature or higher and develops a color when the temperature of the layer is lower than the predetermined temperature;
when the water-based ink layer does not develop a color, a design is shown by at least the second oil-based ink layer; and
when the water-based ink layer develops a color, a background color of the water-based ink layer is shown by at least the second oil-based ink layer.

11. The label according to any one of claims 1 to 10, wherein at least one of the first oil-based ink layer and the second oil-based ink layer contains a curing agent component.

12. The label according to any one of claims 1 to 11, wherein the label base material is a heat shrinkable film.

13. A method for manufacturing a label, the method comprising the steps of:
providing a label base material having a dyne level of 40 mN/m or less measured in accordance with JIS K 6768;
directly forming a water-based ink layer having a halftone dot reproducibility of 50 to 95% , as measured according to the description, on the label base material by using a water-based ink having a water content in a solvent of 90% to 100%;
forming a first oil-based ink layer above the label base material so as to cover the water-based ink layer; and
forming a second oil-based ink layer above the label base material so as to cover the water-based ink layer and the first oil-based ink layer.

## Patentansprüche

1. Etikett, welches umfasst:
ein Etikettengrundmaterial mit einem gemäß JIS K 6768 gemessenen Dyn-Wert von 40 mN/m oder weniger,
eine wasserbasierte Druckfarbschicht, die direkt auf dem Etikettengrundmaterial ausgebildet ist und eine entsprechend der Beschreibung gemessene Rasterpunktreproduzierbarkeit von 50 bis 95 % aufweist,
eine erste ölbasierte Druckfarbschicht, die über dem Etikettengrundmaterial ausgebildet ist, um die wasserbasierte Druckfarbschicht zu bedecken, und
eine zweite ölbasierte Druckfarbschicht, die über dem Etikettengrundmaterial ausgebildet ist, um die wasserbasierte Druckfarbschicht und die erste ölbasierte Druckfarbschicht zu bedecken.

2. Etikett nach Anspruch 1, des Weiteren umfassend eine direkt auf dem Etikettengrundmaterial ausgebildete dritte ölbasierte Druckfarbschicht, wobei
ein Teil der wasserbasierten Druckfarbschicht auf der dritten ölbasierten Druckfarbschicht ausgebildet ist.

3. Etikett nach Anspruch 2, wobei
eine von der dritten ölbasierten Druckfarbschicht umgebene Fensterzone auf dem Etikettengrundmaterial ausgebildet ist, und
die wasserbasierte Druckfarbschicht in der Fensterzone ausgebildet ist und zudem so ausgebildet ist, dass sie eine Rückseite der dritten ölbasierten Druckfarbschicht, die um die Fensterzone angeordnet ist, überlagert.

4. Etikett nach Anspruch 3, wobei eine Kante einer Zone, wo die wasserbasierte Druckfarbschicht ausgebildet ist, vollständig auf der Rückseite der dritten ölbasierten Druckfarbschicht angeordnet ist.

5. Etikett nach einem der Ansprüche 1 bis 4, wobei die wasserbasierte Druckfarbschicht Mikrokapseln enthält.

6. Etikett nach Anspruch 5, wobei die wasserbasierte Druckfarbschicht eine wärmesensitive Druckschicht ist, die wärmesensitive Kapseln als die Mikrokapseln enthält.

7. Etikett nach Anspruch 6, wobei die wärmesensitiven Kapseln eine entsprechend der Beschreibung gemessene mittlere Partikelgröße von 0,1 bis 5 µm aufweisen.

8. Etikett nach Anspruch 6 oder 7, wobei die erste ölbasierte Druckfarbschicht eine opake Druckschicht oder eine farblose, transparente Druckschicht ist, und
die zweite ölbasierte Druckfarbschicht eine opake Druckschicht ist.

9. Etikett nach Anspruch 8, wobei die erste ölbasierte Druckfarbschicht dasselbe Färbematerial enthält wie die zweite Druckfarbschicht.

10. Etikett nach Anspruch 8 oder 9, wobei die wasserbasierte Druckfarbschicht farblos ist, wenn eine Temperatur der Schicht einer vorgegebenen Temperatur oder weniger entspricht, und eine Farbe entwickelt, wenn die Temperatur der Schicht die vorgegebene Temperatur übersteigt, oder farblos ist, wenn die Temperatur der Schicht der vorgegebenen Temperatur entspricht oder höher ist, und eine Farbe entwickelt, wenn die Temperatur der Schicht niedriger als die vorgegebene Temperatur ist,
wenn die wasserbasierte Druckfarbschicht keine Farbe entwickelt, zeigt mindestens die zweite ölbasierte Druckfarbschicht ein Muster, und
wenn die wasserbasierte Druckfarbschicht eine Farbe entwickelt, zeigt mindestens die zweite ölbasierte Druckfarbschicht eine Hintergrundfarbe der wasserbasierten Druckfarbschicht.

11. Etikett nach einem der Ansprüche 1 bis 10, wobei mindestens eine der ersten ölbasierten Druckfarbschicht und der zweiten ölbasierten Druckfarbschicht eine Härtemittelkomponente enthält.

12. Etikett nach einem der Ansprüche 1 bis 11, wobei das Etikettengrundmaterial ein wärmeschrumpfbarer Film ist.

13. Verfahren zur Herstellung eines Etiketts, wobei das Verfahren die Schritte umfasst:
Bereitstellen eines Etikettengrundmaterials mit einem gemäß JIS K 6768 gemessenen Dyn-Wert von 40 mN/m oder weniger,
direktes Ausbilden einer wasserbasierten Druckfarbschicht mit einer entsprechend der Beschreibung gemessenen Rasterpunktreproduzierbarkeit von 50 bis 95 % auf dem Etikettengrundmaterial mit Hilfe einer wasserbasierten Druckfarbschicht, die einen Wassergehalt in einem Lösungsmittel von 90 % bis 100 % aufweist,
Ausbilden einer ersten ölbasierten Druckfarbschicht über dem Etikettengrundmaterial um die wasserbasierte Farbschicht zu bedecken, und
Ausbilden einer zweiten ölbasierten Druckfarbschicht über dem Etikettengrundmaterial um die wasserbasierte Druckfarbschicht und die erste ölbasierte Druckfarbschicht zu bedecken.

## Revendications

1. Étiquette comprenant :
un matériau de base de l'étiquette doté d'un niveau de dyne de 40 mN/m ou moins, mesuré conformément à la norme JIS K 6768 ;
une couche d'encre aqueuse directement formée sur le matériau de base de l'étiquette et présentant une reproductibilité de point en demi-teinte de 50 à 95%, comme mesuré selon la description ;
une première couche d'encre à base d'huile formée au-dessus du matériau de base de l'étiquette de façon à couvrir la couche d'encre aqueuse ; et
une deuxième couche d'encre à base d'huile formée au-dessus du matériau de base de l'étiquette de façon à couvrir la couche d'encre aqueuse et la première couche d'encre à base d'huile.

2. Étiquette selon la revendication 1, comprenant en outre une troisième couche d'encre à base d'huile directement formée sur le matériau de base de l'étiquette, dans laquelle
une partie de la couche d'encre aqueuse est formée sur la troisième couche d'encre à base d'huile.

3. Étiquette selon la revendication 2, dans laquelle
une zone de fenêtre entourée de la troisième couche d'encre à base d'huile est formée sur le matériau de base de l'étiquette, et
la couche d'encre aqueuse est formée dans la zone de fenêtre et est également formée de façon à recouvrir un côté arrière de la troisième couche d'encre à base d'huile disposée autour de la zone de fenêtre.

4. Étiquette selon la revendication 3, dans laquelle l'intégralité d'un bord d'une zone dans laquelle la couche d'encre aqueuse est formée est disposée sur le côté arrière de la troisième couche d'encre à base d'huile.

5. Étiquette selon l'une quelconque des revendications 1 à 4, dans laquelle la couche d'encre aqueuse contient des micro-capsules.

6. Étiquette selon la revendication 5, dans laquelle la couche d'encre aqueuse est une couche d'impression sensible à la chaleur contenant des capsules sensibles à la chaleur comme micro-capsules.

7. Étiquette selon la revendication 6, dans laquelle les capsules sensibles à la chaleur présentent une taille de particule moyenne telle que mesurée selon la description de 0,1 à 5 µm).

8. Étiquette selon la revendication 6 ou 7, dans laquelle
la première couche d'encre à base d'huile est une couche d'impression opaque ou une couche d'impression incolore, transparente, et
la deuxième couche d'encre à base d'huile est une couche d'impression opaque.

9. Étiquette selon la revendication 8, dans laquelle la première couche d'encre à base d'huile contient le même matériau colorant que celui de la deuxième couche d'encre à base d'huile.

10. Étiquette selon la revendication 8 ou 9, dans laquelle
la couche d'encre aqueuse est incolore quand une température de la couche est à une température prédéterminée ou inférieure et développe une couleur quand la température de la couche dépasse la température prédéterminée, ou est incolore quand la température de la couche est à la température prédéterminée ou supérieure et développe une couleur quand la température de la couche est inférieure à la température prédéterminée ;
quand la couche d'encre aqueuse ne développe pas de couleur, un mode de réalisation est présenté par au moins la deuxième couche d'encre à base d'huile ; et
quand la couche d'encre aqueuse développe une couleur, une couleur de fond de la couche d'encre aqueuse est présentée par au moins la deuxième couche d'encre à base d'huile.

11. Étiquette selon l'une quelconque des revendications 1 à 10, dans laquelle au moins une de la première couche d'encre à base d'huile et de la deuxième couche d'encre à base d'huile contient un composant d'agent durcissant.

12. Étiquette selon l'une quelconque des revendications 1 à 11, dans laquelle le matériau de base de l'étiquette est un film thermorétractable.

13. Procédé de fabrication d'une étiquette, le procédé comprenant les étapes consistant à :
fournir un matériau de base d'étiquette présentant un niveau de dyne de 40 mN/m ou moins mesuré conformément à la norme JIS K 6768 ;
former directement une couche d'encre aqueuse présentant une reproductibilité de point en demi-teinte de 50 à 95%, comme mesuré selon la description, sur le matériau de base de l'étiquette en utilisant une encre aqueuse présentant une teneur en eau dans un solvant de 90% à 100% ;
former une première couche d'encre à base d'huile au-dessus du matériau de base de l'étiquette de façon à couvrir la couche d'encre aqueuse ; et
former une deuxième couche d'encre à base d'huile au-dessus du matériau de base de l'étiquette de façon à couvrir la couche d'encre aqueuse et la première couche d'encre à base d'huile.
